# EUROPEAN PATENT SPECIFICATION

(11) **EP 1 704 959 B1**
(45) Date of publication and mention of the grant of the patent: **14.05.2008**
(21) Application number: 06005706.4
(22) Date of filing: 21.03.2006
(51) Int. Cl.: B23Q 11/00, B27C 9/02

(54) **Device with movable chip-conveying baffle for toolholder heads**
Vorrichtung mit verstellbarer Ablenkplatte zur Späneförderung für Werkzeugköpfe
Dispositif avec déflecteur mobile de copeaux pour têtes porte-outil

(30) Priority: 22.03.2005 IT AR20050012
(43) Date of publication of application: 27.09.2006
(73) Proprietor: SCM GROUP S.p.A., 47900 Rimini (IT)
(72) Inventor: Grassi, Giancarlo, 47834 Montefiore (RN) (IT)
(74) Representative: Crugnola, Pietro

(56) References cited:
- EP-A- 1 215 009
- DE-U1- 29 907 571
- GB-A- 1 463 796

## Description

The invention relates to a device with a movable chip-conveying baffle for toolholder heads, by means of which the dust and chips produced during the machining ot products, normally in wood, are directed to a suction inlet to be conveyed to collecting points.

Machines and systems with machining heads are known that, when they operate on products, produce dust and chips that have to be removed as soon as they are produced so that they do not hinder the movement and correct positioning in the machining station of the products that advance in succession or which are positioned individually on the machining station, in such a way that the machining head or the machining heads operate thereupon in the preset manner. As the machining heads are provided with a spindle or electric spindle rotating at high speed, the dust and chips produced by the tool are projected far from the machining point, at a speed that is such that the sucking units, with which the machining heads are equipped, can scarcely collect only the thinner parts with less energy whilst the other parts are scattered in the environment, with the easily imaginable problems that this entails.

The need for solutions is therefore felt with which to facilitate sucking of all the chips and of all the dust produced by the tools during the intervention thereof on the products.

Apart from the elementary and imprecise technique implemented by small operators consisting of arranging near the machining point a screen with which to stop at least the chips projected by the machining tool and facilitate the sucking thereof, so limiting their scattering in the environment, solutions are known that teach the use of specific devices applied to the machining heads.

One of these solutions, devised by Mr. D. Juffray and published in France on O1/03/99, teaches the use of a chip-deviating device applied to a rotating actuator combined with the toolholding head. This device is provided with a baffle with which at least a part of the contour of the rotating tool is enveloped, which intercepts the chips and dust generated by the product during machining thereof, and conveys them to an opening on which the port of the sucking means associated with the machine or with the machining centre is located, of which the toolholder head is part.

In another known solution - which is the object of patent application for utility model DE 29907571U1 of 28/04/1999 - a conveying device and a chipping unit provided with this device are disclosed. The conveying device provides a baffle, intended to partially envelop the tool, provided internally with a helicoidal surface that deviates and accompanies the dust and the chips projected by the tool to an opening on which the port of the sucking unit is anchored.

The chipping unit, of which the conveying device is part, is intended to combine with the tool and is provided with an interface with which it joins the spindle, which transmits movement to the tool housed in the chipping unit. This invention is advantageous when the operating head of the machine always acts with the same tool or with tools that are interchangeable in the same chipping unit.

It is on the other hand a decided drawback if the chipping unit has to be replaced with another one or other ones during machining of the individual product and if each tool is inserted stably into a chipping unit proper to it, as in this case the tool magazine and the robotised arms intended to take them to insert them and remove them from the spindle are significantly complicated.

Another known solution is the one disclosed in Italian patent application B02002A000255 of 3 May 2002. This discloses the solution that teaches recourse to an electric spindle, to the fixed structure of which and in a position coaxial therewith a hub that extends into the chip-collecting baffle is applied in a removable manner through a snap-coupling, so that the tool can be inserted into and removed from the spindle according to known methods.

The invention thus provides a coupling step of the electric spindle with the chip-conveying device, positioned in a rest position in the tool distributor or magazine, in a seat adjacent to the one in which the tools are positioned with which the machine is equipped; a coupling step of said electric spindle with the selected tool, each time that the chip-conveying device has to be used; a step with detachment of first the tool and then the chip-conveying device; a step in which the preset tool is reinserted into the spindle, if the latter has to be released from the chip-conveying device to enable the machine to operate without it.

This invention uses common tools housed in the magazine, in a seat of which the chip-collecting device is positioned. It has on the other hand recourse to an electric spindle with modified casing to enable the coupling-decoupling thereof with the chip-collecting device.

In the prior art machines are thus provided the spindles of which can be combined with tools provided with a chip-conveying device, or spindles first combined with the chip-conveying device and then with one of the tools. In the one case and the other case the complexity of the machines is increased with respect to those that do not teach recourse to chip-collecting devices.

Furthermore, every time the semifinished product, through the particular features thereof, requires several work steps to be performed, some with the spindle combined with the chip-collecting device, other steps with the spindle devoid of this device, normally due to the extremely limited space in which to perform said machining, the output of the machine is significantly reduced because of the assembly and dismantling time for said parts.

Known machines, therefore, both through the increase in the complexity and cost thereof and the increase in the parts subject to maintenance and therefore also to faults, and through the reduction of productivity due to the steps of coupling-uncoupling with the chip-collecting device, cause a noticeable increase in the cost of the processed product.

EP-A-1 215 009 discloses an edge-trimming machine comprising a tool unit having a vertical tool spindle fitted with a tool.

The tool, in its working position, is surrounded by a hood on a plurality of sides and on its side facing a workpiece has a tool outlet opening.

The hood, which is slideable on a guide mounted on a column of the edge-trimming machine, comprises an outer shell and an inner shell which cooperate to define a suction slot for sucking chips and dust.

The hood further comprises a chip-guiding spiral positioned inside the suction slot for conveying chips and dust to a sucking unit.

The edge-trimming machine further comprises a baffle which is totally structurally independent from the hood (8) and is supported by a base structure of the tool unit, in such a way as to surround the outer shell of the hood.

The baffle, by means of an actuator, can be pivoted about an axis of the hood, in the opposite direction to the direction of rotation of the tool.

In this position, the baffle forms a chip guiding surface between the workpiece and the suction slot.

An object of the present invention is to realise a machine and in particular an electric spindle, a spindle or more in general a toolholder head that operates in traditional manner - namely with the tool-change therein conducted according to known methods for operating heads devoid of a chip-collecting device - combined with a chip-collecting device that is finely adjustable at least in the direction of the tool axis, so that it can operate in the best way with each tool, therefore also with those that are formally different from one another.

Another object is to realise a chip-conveying device that is suitable for being combined with a toolholder head such that when it is not an obstacle to performing the machining steps it correctly conveys the dust and the chips produced, but when it is an obstacle it is removed from the tool to make the toolholder head such as if it were devoid of said device.

Another object, lastly, is to make a toolholder head in which the change from the status in which the tool operates in combination with the chip-conveying device to that in which the tool operates without the chip-conveying device occurs within a minimal interval of time so as not to slow down the machining steps and therefore not reduce machine productivity.

The invention that has enabled such results to be achieved is realized by a device comprising a guide, to be joined to the fixed part of the toolholder head, a slide with an end combined with an annular unit, a part of which is rotatable and supports the chip-conveying baffle, with the other end combined with a member through which the rectilinear movements thereof in said guide are piloted. The device furthermore comprises a rotating actuator suitable for piloting the rotations of the rotating part of said annular unit.

Lastly, it may comprise a member suitable for moving said guide to move the chip-conveying baffle away from the tool.

This device is particularly advantageous as it is easy to make and as applying it to the toolholder head, a spindle or an electric spindle does not alter the operation thereof and of the other parts of the machine or system of which said toolholder head is part.

It is advantageous as the chip-conveying device with which it is equipped can be moved axially in a direction that is parallel to the axis of the toolholder head and therefore of the tool to be taken to the position in which, as the tool varies, it achieves best conveying of the dust and chips produced to the point at which they are sucked.

It is advantageous as at the tool change and/or when the chip-conveying device has to be moved from the tool, it can be made to move rectilinearly to the fixed part of the toolholder head or be moved away by rotation and/or rotary and rectilinear movement leaving the entire contour of the tool free.

It is advantageous as it is constantly combined with the toolholder head and the passage from the position in which the chip-conveying baffle partially envelops the tool, to intercept the dust and chips produced, to the position in which said baffle is far from the tool can occur in a very rapid manner, without thus slowing machining of the product.

The invention is advantageous as it is implemented with a particularly simple structure that can enable the chip-conveying baffle to be moved away from the tool in different ways, such as, for example, by rectilinear movement or also by rectilinear movement and then rotation of the guide around an axis, thus enabling, according to the application and the specificity of the machining head, recourse to various types of moving away of the chip-conveying baffle from the machining tool.

These and other advantages will easily be understood from reading the detailed disclosure that follows regarding the embodiments exemplified in the figures of the attached drawing, in which:
- fig. 1 is the axonometric view of a toolholder head combined with the device ending on the annular unit supporting the chip-conveying baffle to a position facing the tool;
- fig. 2 is the axonometric view of the toolholder head and of the device in fig. 1 in the state in which the chip-conveying baffle is retracted, leaving the entire contour of the tool free;
- fig. 3 is the side view of the device terminating on the chip-conveying baffle;

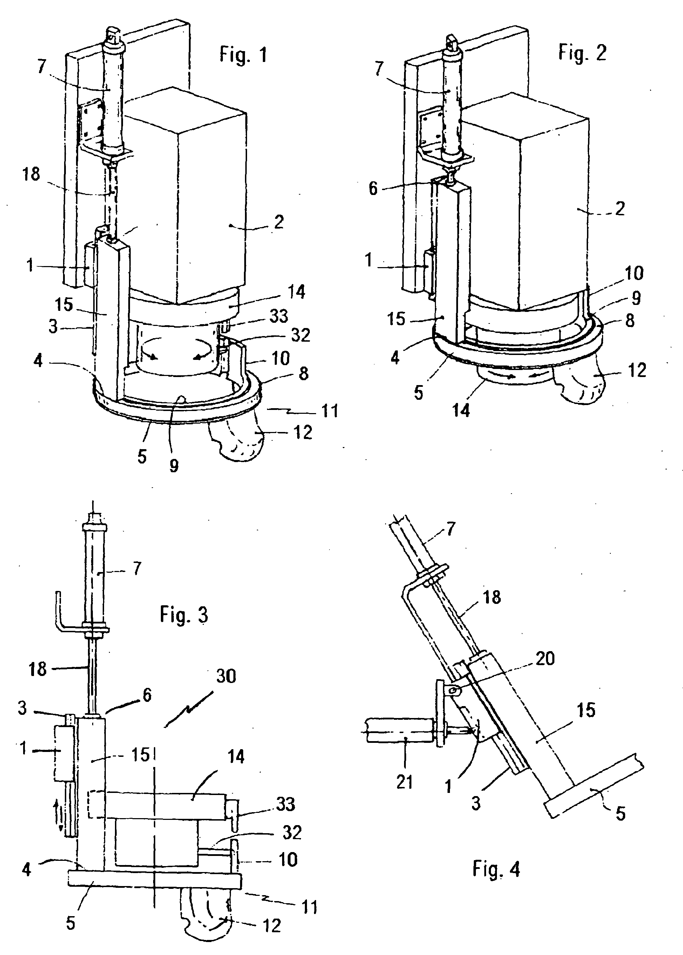

- fig. 4 exemplifies the device in cases in which the chip-conveying baffle has been rotated with respect to the machining position to move it away from the tool. It is understood that the figures reproduced in the attached table are of the schematic type and have an exemplificative character with the sole object of facilitating understanding of the invention without constituting any limitation thereto. The invention thus consists of both the apparatus 30 for toolholder heads, such as for example a spindle or an electric spindle and of said toolholder head 2 combined with such a device. The invention deals with the machines and/or the systems with which machining of products, normally in wood, is carried out that entails the production of dust and chips.

The apparatus 30 that is the object of the invention comprises:
- a guide 1, to be joined to the fixed part of the toolholder head or of the structure of the machine that supports said toolholder head 2;
- a slide 3, combined at an end 4 with an annular unit 5, combined at the other end 6 with drive means 7 that pilots the rectilinear movement thereof in the guide 1;
- an annular unit 5, a part 8 of which is fixedly connected to the slide 3, the other part 9 is on the other hand rotatable on the part 8; to said part 9 the gripping point 10 is fixed through which said rotatable part 9 can be rotated with respect to the fixed part 8 by a suitable rotating actuator 14;
- a chip-conveying device 11, made fixed to the rotatable part 9 of the annular unit 5, the surface 12 or chip-conveying baffle of which is shaped to convey to a sucking point, during operation, the dust and chips produced by the cutting machine that are intercepted by said surface 12 or chip-conveying baffle;
- drive means 7, integral with the guide 1 or, if it is useful, with the fixed part of the toolholder head, suitable for piloting the rectilinear movements of the slide 3 in the guide 1.

Said guide 1, for example of the dovetailed type, is joined to the casing of the toolholder head 2 and is oriented in such a way that the slide 3 slides in it in a direction that is substantially parallel to the axis of the toolholder head 2 on which the tool will be inserted, the profile of which and the type of which will vary in function of the machining tasks to be performed on the product.

The annular unit 5 is sized in such a way that it can slide substantially coaxially to the axis of the toolholder head 2, from a position in which the chip-conveying baffle 12 envelops a part of the contour surface of the tool (fig. 1) to a rectilinearly displaced position (fig. 2) in which at least the tool has a completely free contour, then to reach a position in which said chip-conveying baffle 12 faces the casing of the toolholder head 2 and any way in a position so as not to obstruct the specific machining tasks performed by the tool.

Said chip-conveying baffle 12 can then be made to slide parallel to the axis of the toolholder head and the machining position thereof when it envelops, or when it faces the tool, can be fine-adjusted according to the direction of the axis of the tool, until it assumes the position in which it receives in the best way the dust and the chips produced by the specific tool applied to the spindle. If the tool operates according to other advancing lines on the product positioned in the machining station, the chip-conveying device 11 has to follow, with its orientation, the path followed by the tool. Thus, in this case, the device that is the object of the invention is also provided with the rotating actuating unit 14 that is anchored to the fixed structure of the toolholder head 2, or to the fixed ring of the annular unit 5, and suitable for piloting the rotation of the rotatable part 9 of the annular unit 5 through the dragging arm 32, so that the orientation of the chip-conveying baffle 12 can be varied to keep it in the necessary position for the collection of chips for the particular moving direction of the tool on the product to be processed.

The drive means 7, in the solution exemplified in the drawings, is constituted by a hydraulic jack, that is fixedly connected to the toolholder head 2, the extending part 18 of which is fixedly connected to the slide 3. In another embodiment, the drive means 7 can be constituted by a motor unit or by a bar 18 that is integral with the slide 3, that is piloted in sliding by said motor unit.

In the solution set out so far and shown in figures 1, 2 and 3, the chip-conveying device 11 can slide parallel to the axis of the toolholder head 2 to be arranged in a first machining position, corresponding to the point at which the chip-conveying baffle 12 is near the tool, supported by the toolholder head 2, to perform the function of deviator of chips and dust, with said position fine-adjusted in the direction parallel to the axis of said toolholder head according to the tool applied to it. When it moves to the second position, in which the annular unit 5 has moved near the casing of the toolholder head 2, the chip-conveying device 11 is far from the tool to enable the latter to operate freely; said second position, in the embodiment in figures 1, 2 and 3, is reached with a rectilinear movement parallel to the axis of the toolholder head, until the chip-conveying device 11 is conveyed to the distance from the tool deemed to be appropriate (fig. 2).

In this case the slide 3, through the connecting plate 15, is fixedly connected to the annular unit 5, which acts as a cushion, with a fixed ring 8 and an internal ring 9, which is movable on the fixed one.

If on the other hand it is required that moving of the chip-conveying device 11 away from the tool does not occur by sliding parallel to the axis of the rotating part of toolholder head 2, the annular unit 5 that supports the chip-conveying device 11 is first made to advance until it is taken to the position in which the device 11 can move away from the tool with a rotation and is then rotated as exemplified in figure 4.

In this embodiment the guide 1 is joined through the hinge 20 to the casing of the toolholder head 2, or to another fixed part of the machine.

An actuating means 21, that is fixedly connected to the casing of the toolholder head 2, commands rotation of the guide 1 around the hinge 20. In this way, said actuating means 21 pilots orientating of the guide 1 and thus rotation of the slide 3 with consequent moving of the annular unit 5 away from the tool, the contour thereof thus remaining free to perform those machining tasks that the chip-conveying device 11 would otherwise make impossible.

The invention also refers to the combination of the toolholder head 2 with the disclosed apparatus 30, thus a toolholder head with movable chip-conveying device 11, in which the chip-conveying baffle 12 can move away from the fixed casing of the toolholder head 2 (with spindle or electric spindle) for tools of the type suitable for the machining of products in wood, plastic or other similar materials.

It thus relates to the combination of a toolholder head 2 and of an apparatus 30 with a chip-conveying baffle 12. The latter in one case provides a slidable baffle parallel to the axis of the rotating part of the toolholder head 2. In this case in the lower part the apparatus 30 has the annular unit 5 to which the chip-conveying device 11 is fixed that is provided with a chip-conveying baffle 12 that is shaped in such a way as to envelop a contour portion of the tool, parallel to the axis of which it can be finely moved by said apparatus 30 to make it reach the position deemed to be optimal for intercepting the chips and the dust produced by the tool and conveying them to the sucking port.

Said apparatus 30, in this solution, slides the chip-conveying device 11 from a machining position, in which the chip-conveying baffle 12 is arranged facing a sector of the contour surface of the tool, to a rectilinearly displaced position, such as for example as the position in which it faces the casing of the toolholder head 2, with sliding or rectilinear movement virtually parallel to the axis of the rotating part of the toolholder head 2. In this case, as exemplified in figures 1 and 3, an arresting device 33 is provided that engages in the gripping point 10 of the rotatable part 9 of the annular unit 5 when the drive means 7 retracts the slide 3 as far as to take the chip-conveying baffle 12 far from the tool. This arresting device 33 is thus suitable for preventing the accidental rotations of the rotatable part 9 of the annular unit 5 and for ensuring the positioning thereof compatibly with the machining steps to be performed.

In another solution, as first disclosed and exemplified in figure 4, the apparatus 30 that supports the chip-conveying baffle 12, first performs a rectilinear movement by moving away from the casing of the toolholder head 2, then a rotation from the position in which the chip-conveying baffle 12 is virtually coaxial with the axis of the tool, to a position forming with said axis an angle that is normally greater than 45° and anyway a rotation such as to move away from the tool, sufficient to make the contour of the tool free according to the need of the particular machining task required for the product.

During implementation the constructional details disclosed and shown in the drawings may cause variations in the details without thereby altering the functional logic on which the invention is based and therefore without falling outside the scope thereof, defined by the following claims.

## Claims

1. Device comprising:
- a guide (1) to be joined to a fixed part of a toolholder head (2),
- a slide (3) having an end (4) combined with an annular unit (5), a part (9) of which is rotatable and supports a chip conveying baffle (12), and an other end (6) combined with drive means (7) to pilot the rectilinear movements thereof along said guide (1),
- a rotating actuator (14) for piloting the rotations of said part (9) of the annular unit (5).

2. Device according to claim 1, **characterised in that** said drive means (7) is fixedly connected to said guide (1).

3. Device according to claim 1, **characterised in that** said annular unit (5) comprises a further part (8) on which said part (9) is rotatable.

4. Device according to claim 3, **characterised in that** said further part (8) is fixedly connected to said slide (3).

5. Device according to any preceding claim, **characterised in that** said part (9) is provided with a gripping point (10) through which said rotations can be piloted.

6. Device according to claim 5, **characterised in that** said gripping point (10) comprises a dragging arm (32) projecting from said rotating actuator (14) and engaging a groove axially extending along said gripping point (10).

7. Device according to claim 5, or 6, and comprising an arresting device (33) for engaging said gripping point (10) for preventing accidental rotations of said part (9) and for ensuring the positioning thereof compatibly with the machining steps to be performed.

8. Device according to claim 1, **characterised in that** the guide (1) is intended to be fixed with respect to a casing of the toolholder head (2) and oriented so that the slide (3) slides therein in a direction substantially parallel to the axis of the rotating part thereof, such as a spindle or electric spindle.

9. Device according to claim 1, **characterised in that** the annular unit (5) is so dimensioned as to slide substantially coaxially with a rotating part of the toolholder head (2), from a position in which the chip-conveying baffle (12) surrounds a part of a contour of the tool, to a rectilinearly displaced position in which the contour of the tool is completely free.

10. Device according to claims 1 and 3, **characterised in that** the position of the chip-conveying baffle (12) can be fine-adjusted relative to the direction of the tool axis.

11. Device according to claim 1, **characterised in that** said rotating actuator (14) is fixedly connected to a fixed part of the toolholder head (2), or to said rotatable part (9) of the annular unit (5).

12. Device according to claim 1, **characterised in that** the drive means (7) consists of a hydraulic jack.

13. Device according to claim 1, **characterised in that** said drive means (7) consists of an electric reduction gear and a slideable bar.

14. Device according to claim 1, **characterised in that** the guide (1) is provided with a hinge (20) intended to join the guide (1) to a casing of the toolholder head (2).

15. Device according to any preceding claim, **characterised by** actuating means (21) to pilot the rotation of the guide (1) from a position wherein the chip-conveying baffle (12) is substantially coaxial with the axis of the toolholder head, to a position forming with said axis an angle that is normally greater than 45°, sufficient to make the contour of the tool free.

## Patentansprüche

1. Vorrichtung mit:
- einer Führung (1) zur Verbindung mit einem festen Teil eines Werkzeughalterkopfes (2),
- einem Schlitten (3), der ein Ende (4) aufweist, das mit einer ringförmigen Einheit (5) kombiniert ist, wobei ein Teil (9) davon drehbar ist und ein Spanförderblech (12) aufnimmt, und ein anderes Ende (6) mit einem Antriebsmittel (7) kombiniert ist, um die geradlinigen Bewegungen desselben entlang der Führung (1) zu steuern,
- einem Drehaktuator (14) zum Steuern der Drehungen des Teils (9) der ringförmigen Einheit (5).

2. Vorrichtung nach Anspruch 1, **dadurch gekennzeichnet, dass** das Antriebsmittel (7) fest mit der Führung (1) verbunden ist.

3. Vorrichtung nach Anspruch 1, **dadurch gekennzeichnet, dass** die ringförmige Einheit (5) ferner ein weiteres Teil (8) aufweist, auf dem das Teil (9) drehbar ist.

4. Vorrichtung nach Anspruch 3, **dadurch gekennzeichnet, dass** das weitere Teil (8) fest mit dem Schlitten (3) verbunden ist.

5. Vorrichtung nach irgendeinem vorhergehenden Anspruch, **dadurch gekennzeichnet, dass** das Teil (9) mit einem Greifpunkt (10) versehen ist, durch den die Drehungen gesteuert werden können.

6. Vorrichtung nach Anspruch 5, **dadurch gekennzeichnet, dass** der Greifpunkt (10) einen Zieharm (32) aufweist, der von dem Drehaktuator (14) hervorsteht und an einer Nut angreift, die sich von dem Greifpunkt (10) aus axial erstreckt.

7. Vorrichtung nach Anspruch 5 oder 6, die ferner eine Fangeinrichtung (33) zum Angreifen an dem Greifpunkt (10) aufweist, um zufällige Drehungen des Teils (9) zu vermeiden und um sicherzustellen, dass seine Positionierung kompatibel mit den durchzuführenden Arbeitsschritten ist.

8. Vorrichtung nach Anspruch 1, **dadurch gekennzeichnet, dass** die Führung (1) dazu vorgesehen ist, in Bezug auf ein Gehäuse des Werkzeughalterkopfes (2) fest zu sein und derart orientiert zu sein, dass der Schlitten (3) darauf in einer Richtung gleitet, die im Wesentlichen parallel zu der Achse des rotierenden Teils ist, wie etwa eine Spindel oder eine elektrische Spindel.

9. Vorrichtung nach Anspruch 1, **dadurch gekennzeichnet, dass** die ringförmige Einheit (5) derart dimensioniert ist, dass sie im Wesentlichen koaxial mit einem sich drehenden Teil des Werkzeughalterkopfes (2) von einer Position, in der das spanfördernde Blech (12) einen Teil einer Kontur des Werkzeugs umgibt, zu einer geradlinig versetzten Position verschiebbar ist, in der die Kontur des Werkzeugs vollständig frei ist.

10. Vorrichtung nach Anspruch 1 und 3, **dadurch gekennzeichnet, dass** die Position des spanfördernden Bleches (12) in Bezug auf die Richtung der Werkzeugachse feinjustierbar ist.

11. Vorrichtung nach Anspruch 1, **dadurch gekennzeichnet, dass** der Drehaktuator (14) fest an einem festen Teil des Werkzeughalterkopfes (2) befestigt ist, oder an dem genannten drehbaren Teil (9) der ringförmigen Einheit (5).

12. Vorrichtung nach Anspruch 1, **dadurch gekennzeichnet, dass** das Antriebsmittel (7) aus einem Hydraulikkolben besteht.

13. Vorrichtung nach Anspruch 1, **dadurch gekennzeichnet, dass** das Antriebsmittel (7) aus einem elektrischen Untersetzungsgetriebe und einer verschiebbaren Stange besteht.

14. Vorrichtung nach Anspruch 1, **dadurch gekennzeichnet, dass** die Führung (1) mit einem Gelenk (20) versehen ist, das dazu ausgebildet ist, die Führung (1) mit einem Gehäuse des Werkzeughalterkopfes (2) zu verbinden.

15. Vorrichtung nach irgendeinem vorhergehenden Anspruch, **gekennzeichnet durch** Betätigungsmittel (21) zur Steuerung der Drehung der Führung (1) aus einer Position, in der das spanfördernde Blech (12) im Wesentlichen koaxial mit der Achse des Werkzeughalterkopfes ist, in eine Position, die mit der betreffenden Achse einen Winkel bildet, der normalerweise größer als 45° ist, ausreichend, um die Kontur des Werkzeuges freizulegen.

## Revendications

1. Dispositif comprenant :
- un élément de guidage (1) devant être réuni à une partie fixe d'une tête (2) porte-outil,
- une coulisse (3) ayant une extrémité (4) associée à une unité annulaire (5) dont une partie (9) peut être entraînée en rotation et soutient un déflecteur (12) d'acheminement de copeaux, et une autre extrémité (6) associée à des moyens d'entraînement (7) pour en piloter les mouvements rectilignes le long dudit élément de guidage (1),
- un actionneur rotatif (14) pour piloter les rotations de ladite partie (9) de l'unité annulaire (5).

2. Dispositif selon la revendication 1, ***caractérisé en ce que*** lesdits moyens d'entraînement (7) sont raccordés de manière fixe audit élément de guidage (1).

3. Dispositif selon la revendication 1, ***caractérisé en ce que*** ladite unité annulaire (5) comprend une autre partie (8) sur laquelle ladite partie (9) peut être entraînée en rotation.

4. Dispositif selon la revendication 3, ***caractérisé en ce que*** ladite autre partie (8) est raccordée de manière fixe à ladite coulisse (3).

5. Dispositif selon l'une quelconque des revendications précédentes, ***caractérisé en ce que*** ladite partie (9) est munie d'un point de prise (10) par l'intermédiaire duquel lesdites rotations peuvent être pilotées.

6. Dispositif selon la revendication 5, ***caractérisé en ce que*** ledit point de prise (10) comprend un bras d'entraînement (32) faisant saillie dudit actionneur rotatif (14) et engageant une rainure s'étendant axialement le long dudit point de prise (10).

7. Dispositif selon la revendication 5 ou 6, et comprenant un dispositif d'arrêt (33) pour engager ledit point de prise (10) afin d'empêcher des rotations accidentelles de ladite partie (9) et afin d'assurer le positionnement de celle-ci de manière compatible avec les étapes d'usinage à réaliser.

8. Dispositif selon la revendication 1, ***caractérisé en ce que*** l'élément de guidage (1) est destiné à être fixé à une enveloppe de la tête porte-outil (2) et orienté de telle sorte que la coulisse (3) y coulisse dans une direction sensiblement parallèle à l'axe de la partie rotative de celle-ci, telle qu'une broche ou une broche électrique.

9. Dispositif selon la revendication 1, ***caractérisé en ce que*** l'unité annulaire (5) est dimensionnée de façon à coulisser de manière sensiblement coaxiale à une partie rotative de la tête porte-outil (2), d'une position dans laquelle le déflecteur (12) d'acheminement des copeaux entoure une partie d'un contour de l'outil, jusqu'à une position déplacée rectilinéairement dans laquelle le contour de l'outil est totalement libre.

10. Dispositif selon les revendications 1 et 3, ***caractérisé en ce que*** la position du déflecteur (12) d'acheminement des copeaux peut être ajusté de manière fine par rapport à la direction de l'axe de l'outil.

11. Dispositif selon la revendication 1, ***caractérisé en ce que*** ledit actionneur rotatif (14) est raccordé de manière fixe à une partie fixe de la tête (2) porte-outil, ou à ladite partie rotative (9) de l'unité annulaire (5).

12. Dispositif selon la revendication 1, ***caractérisé en ce que*** les moyens d'entraînement (7) sont constitués par un vérin hydraulique.

13. Dispositif selon la revendication 1, ***caractérisé en ce que*** les moyens d'entraînement (7) sont constitués par un engrenage réducteur électrique et une barre pouvant coulisser.

14. Dispositif selon la revendication 1, ***caractérisé en ce que*** l'élément de guidage (1) est muni d'une articulation (20) destinée à réunir l'élément de guidage (1) à une enveloppe de le tête porte-outil (2).

15. Dispositif selon l'une quelconque des revendications précédentes, ***caractérisée par*** des moyens d'actionnement (21) servant à piloter la rotation de l'élément de guidage (1) d'une position dans laquelle le déflecteur (12) d'acheminement des copeaux est sensiblement coaxial à l'axe de la tête porte-outil, jusqu'à une position formant avec ledit axe un angle qui est normalement supérieur à 45°, suffisant pour faire que le contour de l'outil soit libre.
